# EUROPEAN PATENT APPLICATION

(11) **EP 2 500 318 A1**
(43) Date of publication of application: **19.09.2012**
(21) Application number: 10830061.7
(22) Date of filing: 10.11.2010
(51) Int. Cl.: C01G 49/00, B05D 5/00, B32B 27/18, C01F 7/00, C09D 5/33, C09D 7/12, C09D 201/00, C09K 3/00

(54) **HEAT-INSULATING AGENT COMPOSITION**

(30) Priority: 10.11.2009 JP 2009256935
(71) Applicant: Kyowa Chemical Industry Co., Ltd, Takamatsu-shi, Kagawa 761-0113 (JP)
(72) Inventor: SATO Takatoshi, Sakaide-shi Kagawa 762-0012 (JP)
(74) Representative: Raynor, Stuart Andrew
(86) International application number: PCT/JP2010/070422
(87) International publication number: WO 2011/059105

(57) **Abstract**

This invention aims at providing a heat-shielding agent composition that maintains transparency and at the same time exhibits capability of blocking ultraviolet and infrared rays so that it produces a great heat-shielding effect.

This invention is a heat-shielding agent composition comprising a transition metal salt hydroxide of the following formula and a precursor thereof.

M¹ₐ[Al₁₋ₓ(M²_{1-y}Fe(III)_{y})ₓ]_{b}A_{y}B_{z}(OH)ₙ · mH₂O (1)

## Description

### Technical Field

This invention relates to a heat-shielding agent composition that exhibits transparency and a high infrared ray barrier property and that prevents heat energy from coming in by effectively reflecting heat energy such as sunlight, and a heat-shielding material.

### Background Art

The infrared ray component of the sunlight is one of causes of a so-called heat island phenomenon in which it is absorbed by asphalt or concrete having high thermal absorptivity and the temperature of an urban area exhibits an abnormally high temperature as compared with a non-urban area around it.

Further, the natural environment is affected by an increase in the amount of artificial exhaust heat from air-conditioning machines used for keeping infrared ray from increasing living space temperatures in summer seasons regardless of urban areas or non-urban areas, and infrared ray also exerts influences on the lives and health of residents.

As a method of decreasing the above influences caused by infrared ray, conventionally, white coating compositions are applied to the roofs and walls of buildings. For example, the temperatures of roofs and walls are inhibited from increasing by incorporating titanium dioxide into the coating compositions (Patent Document 1), while no sufficient heat-shielding performances have been attained.

Further, there are various other fields where heat-shielding capability is required like environmental control in agricultural plastic greenhouse, while hollow glass balloons (Shirasu balloons) and titanium oxide have low transparency, and their heat-shielding performances have not been sufficient (Patent Document 2).

The present inventor has proposed a cosmetic composition having ultraviolet absorbing capability and infrared ray blocking capability, while nothing has been disclosed therein with regard to visible light transmissivity and the performances of a heat-shielding coating composition (Patent Document 3).
(Patent Document 1) JP 2006-335949A
(Patent Document 2) JP 2004-175034A
(Patent Document 3) International Publication No. WO2010/067881

### Disclosure of the Invention

It is an object of this invention to provide a heat-shielding agent composition that exhibits ultraviolet ray absorbing capability and infrared ray blocking capability while retaining transparency and that thereby produces a great heat-shielding effect, and a heat-shielding material.

The object of this invention is achieved by the following inventions.
1. A heat-shielding agent composition containing a transition metal salt hydroxide of the following formula (1) or a precursor thereof,

   M¹ₐ[Al₁₋ₓ(M²_{1-y}Fe(III)_{y})ₓ]_{b}A_{y}B_{z}(OH)ₙ·mH₂O (1)

   wherein M¹ represents at least one monovalent or divalent cation selected from the group consisting of Ca²⁺, Na⁺, NH₄⁺, K⁺ and H₃O⁺, M² represents at least one transition metal ion selected from Zn²⁺, Cu²⁺, Mg²⁺, Mn²⁺, In³⁺, Sn²⁺ and Ti⁴⁺, A represents an organic acid anion having 2 to 10 carbon atoms and containing 1 to 4 carboxyl groups in a molecule, B represents at least one inorganic acid anion selected from the group consisting of sulfate ion (SO₄²⁻), nitrate ion (NO₃⁻) and silicate ion (SiO₃²⁻), and a, b, m, n, x, y and z are 0.7≤a≤1.35, 2.7≤b≤3.3, 0≤m≤5, 4≤n≤7, 0≤x≤0.66, 0≤y≤1.0 and 1.7≤z≤2.4.
2. The heat-shielding agent composition as recited in the above 1, which further contains a synthetic resin or a water-base emulsion resin.
3. The heat-shielding agent composition as recited in the above 1, which contains 0.1 to 50 % by weight of the transition metal salt hydroxide of the formula (1) or a precursor thereof.
4. A heat-shielding material comprising a substrate and a coating layer being formed thereon and containing the heat-shielding agent composition recited in the above 1.
5. The heat-shielding material recited in the above 4, which is an infrared cut filter.
6. The heat-shielding material recited in the above 4, which is an infrared reflector.
7. A lighting fixture having the heat-shielding material recited in the above 4.
8. A heating appliance having the heat-shielding material recited in the above 4.
9. A heat-shielding method comprising the step of applying the heat-shielding agent composition recited in the above 2 to an outer wall of a building.
10. A method for preventing a room temperature from increasing by attaching the infrared cut filter recited in the above 5 to a window glass.
11. Heat-insulating clothes comprising the heat-shielding agent composition recited in the above 1.

### Brief Explanation of Drawings

Fig. 1 is the X-ray diffraction pattern of heat-shielding agent No. 1 of Example 1.
Fig. 2 is the X-ray diffraction pattern of heat-shielding agent No. 2 of Example 1.
Fig. 3 is the X-ray diffraction pattern of heat-shielding agent No. 3 of Example 1.
Fig. 4 is the SEM photograph (x 20,000) of heat-shielding agent No. 1 of Example 1.
Fig. 5 is the SEM photograph (x 20,000) of heat-shielding agent No. 2 of Example 1.
Fig. 6 is the SEM photograph (x 20,000) of heat-shielding agent No. 3 of Example 1.
Fig. 7 is the X-ray diffraction pattern of heat-shielding agent No. 6 of Example 1.
Fig. 8 is the SEM photograph (x 20,000) of heat-shielding agent No. 6 of Example 1.
Fig. 9 is the particle size distribution chart of heat-shielding agent No. 1 of Example 1.
Fig. 10 is the X-ray diffraction pattern of heat-shielding agent No. 7 of Example 1.
Fig. 11 is the SEM photograph (x 20,000) of heat-shielding agent No. 7 of Example 1.
Fig. 12 is the chart of light transmittances of heat-shielding films Nos. 1-5 of Example 4 in a wavelength region of 200 to 2,500 nm.
Fig. 13 is the chart of light transmittances of heat-shielding films Nos. 6-9 of Example 4 in a wavelength region of 200 to 2,500 nm.
Fig. 14 is a graph showing the temperature increase inhibiting effect of a heat-shielding film No. 10 of Example 5.
Fig. 15 shows the light reflection factors of heat-shielding application films Nos. 1 and 2 of Example 7 in the wavelength region of 200 to 2,500 nm.

### Best Mode for Carrying Out the Invention

### (Transition metal salt hydroxide)

The heat-shielding agent composition of this invention contains a transition metal salt hydroxide of the following formula (1) or a precursor thereof. The "transition metal salt hydroxide" of the formula (1) is a crystalline compound that is generally called a compound of alunites or jarosite compound. Further, the "precursor of the transition metal salt hydroxide" refers to a compound of alunites or jarosite compound of which the crystallization has not proceeded, as will be described later.

M¹ₐ[Al₁₋ₓ(M²_{1-y}Fe(III)_{y})ₓ]_{b}A_{y}B_{z}(OH)ₙ·mH₂O (1)

M¹ represents at least one monovalent or divalent cation selected from the group consisting of Ca²⁺, Na⁺, NH₄⁺, K⁺ and H₃O⁺, and it is preferably Na⁺.

M² represents at least one transition metal ion selected from the group consisting of Zn²⁺, Cu²⁺, Mg²⁺, Mn²⁺, In³⁺, Sn²⁺ and Ti⁴⁺.

A represents an organic acid anion having 2 to 10 carbon atoms and containing 1 to 4 carboxyl groups in a molecule. The organic acid anion is preferably an organic carboxylate or organic oxycarboxylate, and it is more preferably an organic carboxylate or organic oxycarboxylate having 1 to 15 carbon atoms. A is still more preferably an organic carboxylate or organic hydroxycarboxylate having 1 to 15 (in particular 2 to 10) carbon atoms and having 1 to 4 carboxyl groups. Particularly preferably, it represents at least one selected from the group consisting of oxalate ion, citrate ion, maleate ion, tartarate ion, glycerate ion, gallate ion and lactate ion.

The present inventor has found that the forms of transition metal salt hydroxide particles are dependent upon the steric structure of the organic acid anion (A) in the above formula (1). In particular, when A in the transition metal salt hydroxide particles of this invention is an organic acid anion having 2 to 10 carbon atoms and containing 1 to 4 carboxyl groups in a molecule, the transition metal salt hydroxide particles easily come to have polyhedral forms.

B represents at least one inorganic acid anion selected from the group consisting of sulfate ion (SO₄²⁻), nitrate ion (NO₃⁻) and silicate ion (SiO₃²⁻).

An embodiment in which 0≤z≤0.66 and 0≤y≤1.0 is preferred, and an embodiment in which 0≤x≤0.6 and 0≤y≤1.0 is more preferred. When x exceeds 0.66, undesirably, red iron oxide (Fe₂O₃) is generated. With an increase in the above x and y, i.e., with an increase in the content of Fe, the transition metal salt hydroxide particles of the formula (1) take on the color of white - flesh color - red.

In the formula, a, b, m, n, x, y and z are 0.7≤a≤1.35, 2.7≤b≤3.3, 0≤m≤5, 4≤n≤7, 0≤x≤0.66, 0≤y≤1.0 and 1.7≤z≤2.4, a is preferably 0.9≤a≤1.3, b is preferably 2.8≤b≤3.2, m is preferably 0≤m≤5, n is preferably 5≤n≤6, y is preferably 0≤y≤1.0 and z is preferably 1.9≤z≤2.3. When they are in the preferred ranges, transition metal salt hydroxide particles having higher dispersibility can be obtained.

In this invention, when y in the above formula (1) is 0 and when A is oxalic acid, the forms of the transition metal salt hydroxide particles are disc-shaped ("go" stone-shaped). In other embodiment for achieving the object of this invention, preferably, the surfaces of the disc-shaped transition metal salt hydroxide particles hold iron (Fe(III)), zinc or titanium.

The average secondary particle diameter of the transition metal salt hydroxide particles of the formula (1), measured by a laser diffraction method, is 0.5 to 10 µm, preferably in the range of 0.3 to 5 µm.

The specific surface area of the transition metal salt hydroxide particles of the formula (1), measured by a BET method, is 0.1 to 300 m²/g, preferably in the range of 0.5 to 250 m²/g.

The transition metal salt hydroxide particles of the formula (1) have a particle size distribution sharpness (D_{R}) in the range of 1≤D_{R}≤1.8, which is important for an improvement in dispersibility and important further for a use sense and the exhibition of capability of preventing ultraviolet and infrared rays.

The particle size sharpness (D_{R}) is one of measures for evaluating particle diameter uniformity, and it is a value of ratio of D₇₅/D₂₅ in which D₂₅ is a particle diameter of a particle at a cumulative frequency of 25 %, and D₇₅ is a particle diameter at a cumulative frequency of 75 %, counted from particles having larger diameters in a cumulative frequency graph of which the abscissa axis represents particle diameters and the ordinate axis represents accumulative frequency. The range of D_{R} is 1.01≤D_{R}≤1.5 in a preferred embodiment, more preferably 1.02≤D_{R}≤1.4, most preferably 1.03≤D_{R}≤1.3.

### (Production of transition metal salt hydroxide particles)

### (Production of transition metal salt hydroxide particles)

The transition metal salt hydroxide particles of the formula (1) can be generated by adding an alkyl hydroxide aqueous solution containing M¹ in the formula (1) to a mixture solution of a water-soluble salt of the M¹, a water-soluble salt of aluminum and iron, a water-soluble salt of M² and an organic acid or organic acid salt and allowing them to react under heating. Further, the thus-generated transition metal salt hydroxide particles are filtered, washed and dried, whereby a hydrous powder of the transition metal salt hydroxide particles can be obtained.

For example, in an embodiment in which M¹ is Na⁺, M² is Zn²⁺, A is an oxalic acid and B is a sulfate ion in the above formula (1), the transition metal salt hydroxide particles can be generated by adding sodium hydroxide to a mixture solution of aluminum sulfate, ferric sulfate, zinc oxide, sodium sulfate and oxalic acid and allowing them to react under heat in the range of room temperature to 250°C. The thus-generated transition metal salt hydroxide particles are filtered, washed and dried as required to give a hydrous powder of the transition metal salt hydroxide particles.

In this invention, a product obtained by carrying out the above reaction at room temperature to 60°C in the above synthesis method is referred to as "precursor of transition metal salt hydroxide", and a product obtained by carrying out the above reaction at 60°C or higher is referred to as "transition metal salt hydroxide". The feature of the "precursor of transition metal salt hydroxide" is that no clear peak appears in its X-ray diffraction pattern, which is a contrast to the "transition metal salt hydroxide" in which a characteristic peak of a compound of alunites appears. When the "precursor of transition metal salt hydroxide" is fired at 150°C or higher, a characteristic peak of "transition metal salt hydroxide (compound of alunites)" appears. This is why it is called "precursor of transition metal salt hydroxide".

In the above reaction, when the reaction molar ratio [NaOH]/([Fe]+[Al]) is fixed at 3.94, the iron and aluminum molar ratio [Al]/[Fe] is preferably 0.1≤[Al]/[Fe]≤2. It is more preferably 0.1≤[Al]/[Fe]≤1.6. When [Al]/[Fe] exceeds 2, undesirably, fine iron oxide particles (red iron oxide) are deposited.

In the above reaction, when the reaction molar ratio [Al]/[Fe] is fixed at 1.5, the molar ratio [NaOH]/([Fe]+[Al]) is preferably 3.944≤[NaOH]/([Fe]+[Al])≤4.4. It is more preferably 1≤[NaOH]/([Fe]+[Al])≤1.6. When [Al]/[Fe] exceeds 2, undesirably, fine iron oxide particles (red iron oxide) are deposited.

When a mixture solution prepared by further adding zinc oxide to the above mixture solution is allowed to react with an alkali hydroxide mixture solution under heat, there can be generated a solid solution of organic acid anion-containing transition metal salt hydroxide particles of which the composition is further different from that of the above transition metal salt hydroxide particles. In this case, the reaction molar ratio [Al]/([Fe]+[Zn]) is also preferably in the same range as that of the reaction molar ratio of [Al]/[Fe]. Further, [NaOH]/([Fe]+[Al]+[Zn]) is also preferably in the same range as that of [NaOH)/([Fe]+[Al]).

In the above reaction, when the molar amount of [Fe] or [Zn] is rendered large, there can be obtained a composition in which a hydrolysis product of a compound relating to such an ion, i.e., oxide, hydroxide, basic salt or acidic salt is held on the surface of each of the transition metal salt hydroxide particles (to be sometimes referred to as "composite particles" hereinafter). Specifically, there can be obtained transition metal salt hydroxide particles each of which holds iron oxide, iron hydroxide (composite hydroxide) or zinc oxide. These composite particles maintain the particle diameter and form of the transition metal salt hydroxide particles before holding the hydrolysis product.

The particles of which the surfaces hold a metal hydrolysis product can be obtained by a conventionally known method. That is, they can be obtained as well by a method in which the synthesized transition metal salt hydroxide is later allowed to hold various metal compounds. For example, the above particles can be obtained by a method in which the transition metal salt hydroxide particles and base such as sodium hydroxide or the like are added to an aqueous solution of zinc sulfate or ferric chloride to deposit a hydrolysis product of zinc or iron on the surfaces of the transition metal salt hydroxide.

The amount of zinc as zinc oxide held on the basis of the transition metal salt hydroxide is preferably in the range of 0.1 to 10 %. The amount of iron as iron oxide held on the basis of the transition metal salt hydroxide is preferably in the range of 0.1 to 3 %.

The transition metal salt hydroxide holding a hydrolysis product of zinc or iron on surfaces (to be referred to as "composite particles") exhibits a particle size distribution sharpness (D_{R}) of a value in the range of 1≤D_{R}≤1.8, and is hence excellent in dispersibility in water and fats and fatty oils. When these composite particles are incorporated into a coating composition, the coating composition exhibits excellent ultraviolet and infrared shielding capabilities over a coating composition according to a conventional method in which zinc oxide or iron oxide is singly incorporated, so that they are preferred for solving the problems in this invention.

A fired product obtained by firing the transition metal salt hydroxide particles of the formula (1) or the composite particles at 150 to 700°C exhibits excellent ultraviolet and infrared shielding capabilities as well, and hence is useful for solving the problems in this invention.

The transition metal salt hydroxide particles of this invention are excellent in dispersibility even when they are used as they are, while they can be improved in water repellency, oil repellency or dispersibility by surface-treating them with perfluoroalkyl phosphate, silicones such as methyl hydrogen polysiloxane or a fluorine compound. The surface treatment of the transition metal salt hydroxide particles with a surface treating agent can be carried out by a method that is known per se as a particle surface treatment method, while the surface treating agent may be added after any one of the steps of the reaction (synthesis) under heat, filtering, washing and drying. The surface treatment method can be carried out by a conventionally known method such as a wet method or a dry method. The amount of the surface treating agent per 100 parts by weight of the transition metal salt hydroxide particles is 0.01 to 10 parts by weight, preferably 0.05 to 5 parts by weight.

### (Heat-shielding agent composition)

The content of the transition metal salt hydroxide of the formula (1) or its precursor in the heat-shielding agent composition of this invention is preferably 0.1 to 50 % by weight, more preferably 1.0 to 10.0 % by weight, still more preferably 2.0 to 6.0 % by weight. When the content of the transition metal salt hydroxide is less than 0.1 % by weight, no heat-shielding effect is produced. When it exceeds 50 % by weight, adhesive strength, the viscosity and cracking resistance are liable to decrease.

The heat-shielding agent composition of this invention preferably contains a synthetic resin or water-base emulsion resin as a binder.

The synthetic resin includes an alkyd resin, an aminoalkyd resin, an acrylic resin, a phenol resin, a urea resin, a melamine resin, an epoxy resin, polyurethane, polyvinyl chloride and polyvinyl acetate. Of these, an acrylic resin or epoxy resin is preferred. Further, the water-base emulsion resin includes silicon acryl emulsion, acryl emulsion, urethane emulsion and urethane acryl emulsion, and of these, silicon acryl emulsion is preferred. The content of the transition metal salt hydroxide of the formula (1) in the heat-shielding agent composition of this invention per 100 parts by weight of the binder is preferably 100 to 200 parts by weight.

The heat-shielding agent composition of this invention may contain, as arbitrary components, those components which are used in normal coating compositions, such as a plasticizer, a silane coupling agent, a dispersing agent and an antifoaming agent. Further, the transition metal salt hydroxide and its precursor can be used in combination with a pigment such as titanium oxide or zinc oxide or a rust preventing agent such as zinc-containing hydrotalcite.

The plasticizer includes phthalic esters such as dioctyl phthalate (DOP), phosphoric esters such as triethyl phosphate (TEP) and tributyl phosphate (TBP), phenyl glycidyl ether (PGE), benzyl alcohol, an acetylcitric-acid-containing plasticizer, an epoxy-containing plasticizer and a trimellitate-containing plasticizer. The content of the plasticizer based on the heat-shielding agent composition is preferably 0.5 to 5.0 % by weight, more preferably 1.0 to 4.0 % by weight, still more preferably 1.5 to 2.5 % by weight. When it is less than 0.5 % by weight, the flexibility at a low temperature is liable to be inferior. When it exceeds 5.0 % by weight, the drying capability and dyeability are liable to be inferior.

The silane coupling agent includes silane compounds having functional groups such as a vinyl group, an epoxy group, a styryl group, a methacryloxy group, an acryloxy group, an amino group, a ureido group, a chloropropyl group, a mercapto group, an isocyanate group and a sulfide group, while a silane compound having an epoxy group is preferred. The content of the silane coupling agent based on the heat-shielding agent composition is preferably 0.01 to 5.0 % by weight, more preferably 0.02 to 4.0 % by weight, still more preferably 0.03 to 3.0 % by weight. When the content of the above silane coupling agent is less than 0.01 % by weight, the coating composition strength and the effect on improvement of water resistance are liable to be insufficient. When it exceeds 4.0 % by weight, the balance of the coating composition is disrupted, and the adhesion strength, viscosity and cracking resistance are liable to decrease, or the viscosity is liable to increase daily. In addition to a method of incorporating the silane coupling agent to the heat-shielding composition, there is also frequently employed a method in which the transition metal salt hydroxide particles are surface-coated with the silane coupling agent.

The dispersing agent includes alkylamine salt of polycarboxylic acid, alkylammonium salt, alkylolaminoamide, polycarboxylic acid polyaminoamide, ammonium salt of an acrylic copolymer, polycarboxylic acid sodium salt, polycarboxylic acid ammonium salt, polycarboxylic acid aminoalcohol salt, polyaminoamide-containing carboxylic acid salt and polyaminoamide-containing polar acid ester/salt.

The antifoaming agent includes a modified silicone-containing antifoaming agent, a special silicone-containing antifoaming agent, a silicone-containing antifoaming agent, a silica-containing antifoaming agent, a silica silicone-containing antifoaming agent, hydrophobic silica, hydrophobic silicone, wax, special wax and polysiloxane.

The content of each of the dispersing agent and the antifoaming agent based on the heat-shielding coating composition is preferably 0.1 to 5.0 % by weight, more preferably 0.3 to 4.0 % by weight, still more preferably 0.5 to 3.0 % by weight. When the above content is less than 0.1 % by weight, the coating composition is liable to be poor in dispersibility or antifoaming capability. When it exceeds 5.0 % by weight, the coating composition is excellent in dispersibility and antifoaming capability, while the surface of a coating is liable to cause a repellency or orange peel phenomenon when the coating composition is applied.

### (Coating composition)

When the heat-shielding agent composition of this invention is used as a coating composition, generally, the coating composition can be prepared by mixing the binder, the transition metal salt hydroxide of the formula (1) and other pigment with water or an organic solvent, and dispersing and kneading the mixture by means of any one of various dispersing and kneading apparatuses such as a three-roll mill, a ball mill, a sand mill, a bead mill and a kneader. When the binder is an emulsion resin, the water or organic solvent is not always necessarily required, and they can be used as required.

Further, it is preferred to use the above dispersing agent during the dispersing of the transition metal salt hydroxide, since the dispersibility and dispersion stability becomes excellent. The dispersing agent is preferably incorporated in an amount of 50 parts by weight or less per 100 parts by weight of the transition metal salt hydroxide. The water or organic solvent may be used in a total amount when the transition metal salt hydroxide is dispersed, or part of it may be added after the transition metal salt hydroxide is dispersed. The water or organic solvent is preferably used in an amount of 50 parts by weight or more per 100 parts by weight of total amount of the binder and transition metal salt hydroxide during the dispersing of these. When it is less than 50 parts by weight, the viscosity during the dispersing is too high, and in particular, it is sometimes difficult to disperse them when they are dispersed with a ball mill, a sand mill or a bead mill.

The organic solvent used during the dispersing includes ketone-containing, alcohol-containing and aromatic solvents. Specifically, it includes acetone, cyclohexane, ethylene glycol, methyl alcohol, ethyl alcohol, isopropyl alcohol, benzene, toluene, xylene, ethyl lactate and ethyl acetate. These may be used singly or in combination of the two or more of them.

However, the water or organic solvent is properly selected and determined depending upon a combination with other components, and if some organic solvent is used and, the heat-shielding performance that is a feature of this invention is outside the specified range, obviously, such an organic solvent can be no longer used in an intended system. Therefore, the organic solvent to be used is not specially limited, while it is required to select an organic solvent suitable for the system.

The application method for the thus-obtained heat-shielding coating composition preferably includes coating with a brush, spray coating and coating with a roll coater, while an electrostatic coating, curtain coating or immersion method can be also used depending upon an object to which the coating composition is applied. Further, as a method of forming a coating by drying after applying, there may be employed a natural drying or baking method, and the method of forming a coating is selected as required depending upon properties of the coating composition.

The thickness of the coating film is preferably 100 to 400 µm, more preferably 200 to 300 µm. When it is less than 100 µm, the thickness is small, so that the shielding capability is poor and that the heat-shielding property is liable to be decreased. When it exceeds 400 µm, the shielding capability and the heat-shielding property are excellent, while the flexibility to go with a substrate is liable to be decreased.

### (Heat-shielding material)

This invention includes a heat-shielding material comprising a substrate and a coating layer formed thereon, the coating layer containing the heat-shielding coating composition of this invention.

The substrate includes an aluminum plate, a galvanized steel plate, an aluminum-zinc-coated steel plate, an iron plate, a tin plate, a slate plate and concrete, which constitute structures such as buildings. The substrate is preferably subjected to undercoating treatment, and for example, a primer is applied. For example, there is a method in which an epoxy primer or the like is applied to form a 10 to 100 µm thick undercoat layer, and then the heat-shielding composition is applied thereon.

Further, the substrate includes a window glass for a building and a film for agriculture. A heat-shielding material obtained by applying the heat-shielding agent composition of this invention directly to a window glass of a building or a film for agriculture can prevent an abnormal increase in temperature in a building or plastic greenhouse.

An abnormal increase in temperature in a building or plastic greenhouse can be also prevented by applying the heat-shielding agent composition of this invention to a resin film substrate and attaching it to a window glass of a building or an agricultural film.

To apply the heat-shielding agent composition of this invention to the substrate, the transition metal salt hydroxide particles of the formula (1) are dispersed in a binder comprising an acrylic resin, an unsaturated polyester resin, an epoxy resin, a silicon resin or a rubber-containing resin, and the thus-prepared dispersion is coated on the substrate and the applied dispersion is cured.

The content of the transition metal salt hydroxide particles of the formula (1) per 100 parts by weight of the binder is 100 to 200 parts by weight. When the content of the transition metal salt hydroxide particles exceeds 200 parts by weight, undesirably, the total light transmittance comes to be less than 75 %, or the haze is rendered less than 80 %. When the content of the transition metal salt hydroxide particles is less than 100 parts by weight, undesirably, the ultraviolet and infrared ray shielding capability is decreased.

When a thermosetting or photo-curable acrylic resin is used as a resin binder, an applied resin is cured by light or heat to produce a heat-shielding material. The coating solution containing the above transition metal salt hydroxide particles is preferably defoamed before its application.

The coating solution can be applied onto a substrate by a conventionally known application method such as application with a brush, application with a roller, spray coating, airless spray, roll coating, application by immersion, electrodeposition coating, electrostatic coating or ultraviolet ray curing application, or a conventionally known coating or printing method such as gravure coating, air knife coating, kiss coating, spray coating, wheeler coating, gravure printing, gravure offset printing, lithographic offset printing, die lithographic printing, letterpress printing, intaglio printing, silk screen printing, electrostatic printing or inkjet printing.

For obtaining an effect produced by the orientation of particles in a constant direction, further, the application is preferably carried out by gravure coating, air knife coating or kiss coating.

The application thickness of the coating solution is preferably in the range of 1 to 50 µm. When it is less than 1 µm, undesirably, the haze is decreased. When it exceeds 50 µm, undesirably, the total light transmittance is decreased. When the application amount is insufficient in some application method, twice or three times recoatings with the coating solution are sometimes performed.

For curing or stabilizing the applied layer, further, the applied film may be left in a temperature environment of room temperature or approximately at 30 to 60°C for about 1 day to 2 weeks to cure it.

Further, one surface or each surface of the substrate may be laminated with a layer having at least one of a sticking preventing function, an antistatic function, a scratch preventing function, a light diffusing function or an antireflection function.

For direct application to the roof of a building or an agricultural plastic greenhouse, there is employed a method in which an emulsion prepared by suspending the transition metal salt hydroxide particles in water is sprayed. In this case, preferably, an emulsion prepared by suspending 10 to 500 g, preferably 50 to 100 g, of the transition metal salt hydroxide particles per liter of water is sprayed.

The coating layer formed by applying the heat-shielding agent composition of this invention inhibits increasing its surface temperature by infrared ray, i.e. it can provide the heat-shielding performance. Further, since the transition metal salt hydroxide particles of the formula (1) have the capability of absorbing ultraviolet ray, they prevent the binder in a coating film from deteriorating in particular by ultraviolet ray, and are excellent in whetherability, so that there can be provided a coating film free from deterioration for a long period of time.

The heat-shielding material includes an ultraviolet and infrared cut film. It also includes an infrared reflector. The heat-shielding material of this invention can be used as a lighting fixture or heating appliance.

Further, this invention includes a heat-shielding method comprising the step of applying the heat-shielding agent composition of this invention to the outer wall of a building.

The heat-shielding agent composition of this invention is formed into a film and the film is attached to the window glass of a building or an agricultural film, whereby an abnormal increase in temperature inside the building or plastic greenhouse can be prevented. Therefore, this invention includes a method for preventing a room temperature from increasing, by attaching the ultraviolet and infrared cut filter of this invention to a window glass.

Further, this invention includes heat-insulating clothes comprising the heat-shielding agent composition of this invention.

### Examples

This invention will be specifically explained with reference to Examples hereinafter. Reagents of 1st grade supplied by Wako Pure Chemical Ind., Co., Ltd. were used unless otherwise specified. Properties were measured by the following methods.

### (Measuring apparatus and method)

(1) Measurement method for particle size distribution, average secondary particle size and particle size distribution sharpness D_{R}: according to a laser diffraction scattering method
   Apparatus: Particle size distribution meter, Microtrack MT3300 (supplied by Leed & Nortrup Instruments Company)
   Method: A sample powder in an amount of 700 mg was added to 70 ml of a 0.2 wt% sodium hexametaphosphate aqueous solution, and ultrasonically dispersed for 3 minutes, and then it was measured for a particle size distribution under stirring with a stirrer.
(2) Observation of particle form: according to SEM photograph
   Apparatus: Scanning electron microscope S-3000N (of Hitachi, Limited).
   Method: Accelerating voltage 15 kV, working distance 10 mm, magnifications 2,000, 10,000 and 20,000 magnifications
(3) Measurement of refractive index
   Apparatus: Abbe refractometer 1T (of ATAGO)
   Method: A sample powder in an amount of 5 mg was added to 5 ml of a proper organic solvent and ultrasonically dispersed for 10 minutes, and a transparent portion was spread in a form of a thin film on a main prism surface and determined for a refractive index.
(4) Analysis of X-ray diffraction
   Apparatus: RINT2200V X-ray diffraction system (supplied by Rigaku Corporation)
   Method: CU-Kα, angle (2θ) : 5 to 65°, step: 0.02°, scan speed: 4°/minute, tube voltage: 40 kV, tube current: 20 mV.
(5) Measurement of application film thickness
   An application layer was measured for a thickness with a test piece thickness gage SDA-25 model (of Kobunshi Keiki K.K.).
(6) Ultraviolet-visible light-infrared transmittance measurement
   Apparatus: spectrophotometer U-4100 (of Hitachi, Limited)
   Method: A film was measured according to a transmission method, and a coating composition was measured according to a reflection method.

This invention will be explained more in detail with reference to Examples hereinafter, while this invention shall not be limited by Examples. In Examples, "%" stands for "% by weight" and "part", for "part by weight", unless otherwise specified.

Reagents of special grade supplied by Wako Pure Chemical Ind. Co., Ltd. were used unless otherwise specified.

### Example 1

### (Heat-shielding agent No. 1)

Na_{1.1}[Al_{0.4}Fe_{0.6}]_{3.0}(SO₄)_{2.2}(OH)_{5.7} · 3. 1H₂O (2)

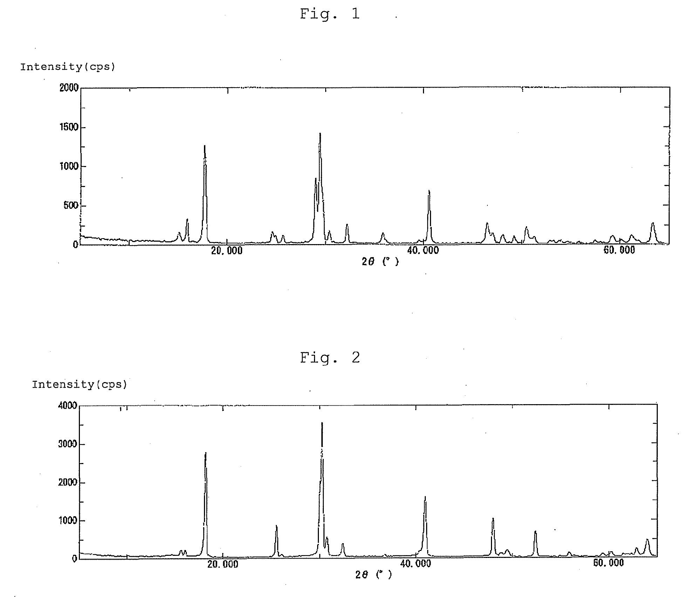

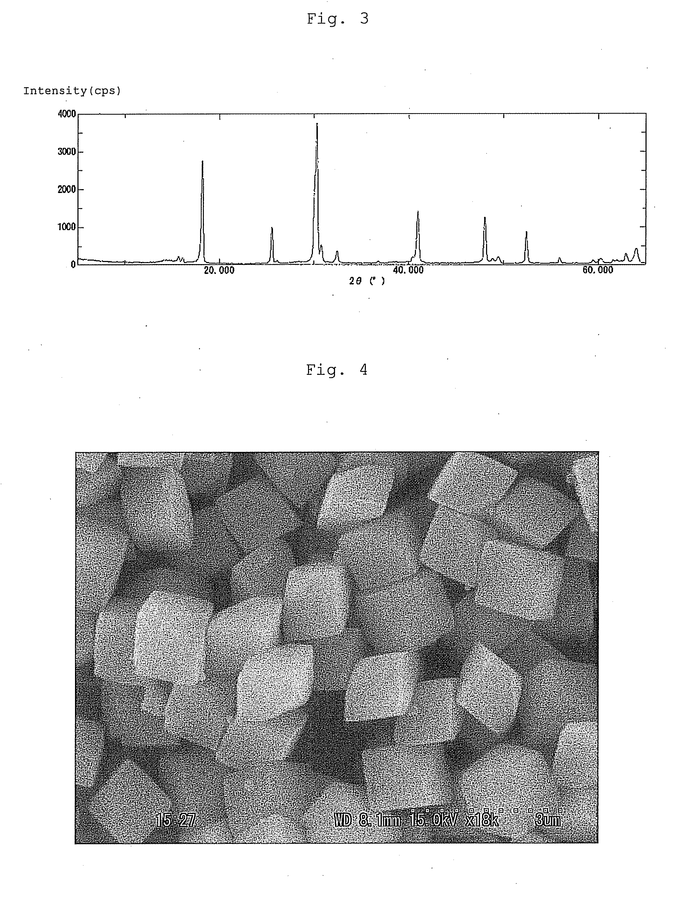

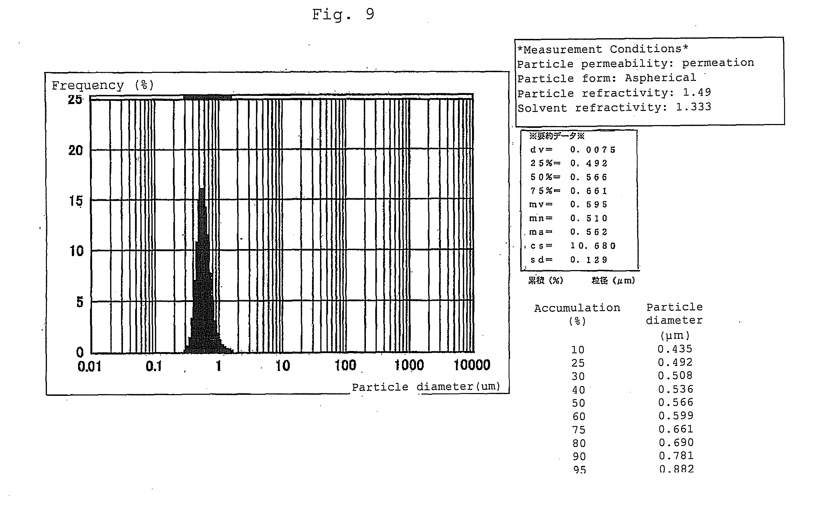

500 mL of a mixture solution containing 78.5 mL (0.081 mol) of a 1.037 mol/L aluminum sulfate aqueous solution, 48.27 g (0.1207 mol) of ferric sulfate (Fe₂ (SO₄) · xH₂O) and 28.4 g (0.3 mol) of sodium sulfate (Na₂SO₄) was stirred at 40°C for 30 minutes. Then, 230.7 mL of a 3.38N sodium hydroxide aqueous solution was added to the above mixture solution, and the mixture was stirred at 40°C for 1 hour. Then, the mixture was further hydrothermally reacted at 170°C for 3 hours, followed by filtering, washing and drying, to give a transition metal salt hydroxide (heat-shielding agent No. 1) having the form of polyhedrons. In this case, the reaction molar ratio [Al]:[Fe] was 1:1.5. Fig. 1 shows the X-ray diffraction pattern of the heat-shielding agent No. 1, and Fig. 4 shows the SEM photograph (x 20,000) thereof. Further, Fig. 9 shows the particle size distribution chart of the heat-shielding agent No. 1.

### (Heat-shielding agent No. 2)

Na_{1.1}[Al_{0.97}Fe_{0.03}]_{3.0}(SO₄)_{2.1}(OH)_{5.9} · 3.5H₂O (3)

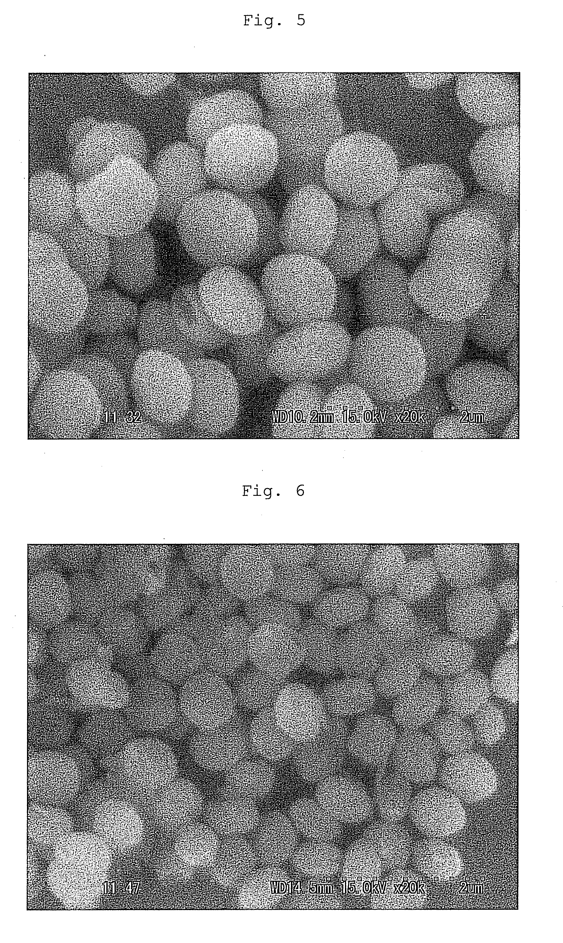

In a synthesis reaction for the above heat-shielding agent No. 1, the reaction molar ratio [Al]:[Fe] was changed to 1:0.034, to give a heat-shielding agent No. 2 having the form of discs. Fig. 2 shows the X-ray diffraction pattern of the heat-shielding agent No. 2, and Fig. 5 shows the SEM photograph (x 20,000) thereof.

### (Heat-shielding agent No. 3)

Na_{1.0}[Al_{0.99}Fe_{0.01}]_{3.0} (SO₄) _{2.0} (OH)_{6.0} · 2.8H₂O (4)

In a synthesis reaction for the above heat-shielding agent No. 1, 0.04 mol (5.04 g) of oxalic acid was further added to the mixture solution, and the reaction molar ratio [Al]:[Fe] was changed to 1:0.003, to give a heat-shielding agent No. 3 having the form of spheres. Fig. 3 shows the X-ray diffraction pattern of the heat-shielding agent No. 3, and Fig. 6 shows the SEM photograph (x 20,000) thereof.

### (Heat-shielding agent No. 4)

Na_{1.1}[Al_{0.59} (Fe_{0.004}Zn_{0.905}Mg_{0.091}) _{0.41}]_{3.0} (SO₄) _{2.1} (OH) _{5.9} · 3. 0H₂O (5)

500 mL of a mixture solution containing 0.0065 mol of aluminum sulfate, 0.096 g (0.00024 mol) of ferric sulfate, 0.04 mol of zinc oxide (Class 1/Seido Chemical Ind. Co., Ltd.), 1.14 g of magnesium sulfate and 0.3 mol of sodium sulfate was stirred at 40°C for 30 minutes. Then, 230.7 mL of a 3.38N sodium hydroxide aqueous solution was added to the above mixture solution, and the mixture was stirred at 40°C for 1 hour. Then, the mixture was further hydrothermally reacted at 180°C for 2 hours, followed by filtering, washing and drying, to give a heat-shielding agent No. 4 having the form of cylinders. In this case, the reaction molar ratio [Al]:[Zn]:[Fe]:[Mg] was 1:0.62:0.003:0.062.

### (Heat-shielding agent No. 5)

Na_{1.1}[Al_{0.59} (Fe_{0.004}Zn_{0.905}Mn_{0.091}) _{0.41}]_{3.0} (SO₄) _{2.2} (OH) _{5.7} · 3.2H₂O (6)

A heat-shielding agent No. 5 was obtained in the same manner as in the production of the heat-shielding agent No. 4 except that the magnesium sulfate was replaced with manganese sulfate (MnSO₄ · H₂O). The reaction molar ratio [Al]:[Zn]:[Fe]:[Mn] in the above synthesis was 1:0.62:0.003:0.062.

### (Heat-shielding agent No. 6)

Na_{1.2} [Al_{0.59} (Fe_{0.004}Zn_{0.905}In_{0.091}) _{0.41}]_{3.0} (SO₄) _{2.1} (OH) _{6.0} · 2.9H₂O (7)

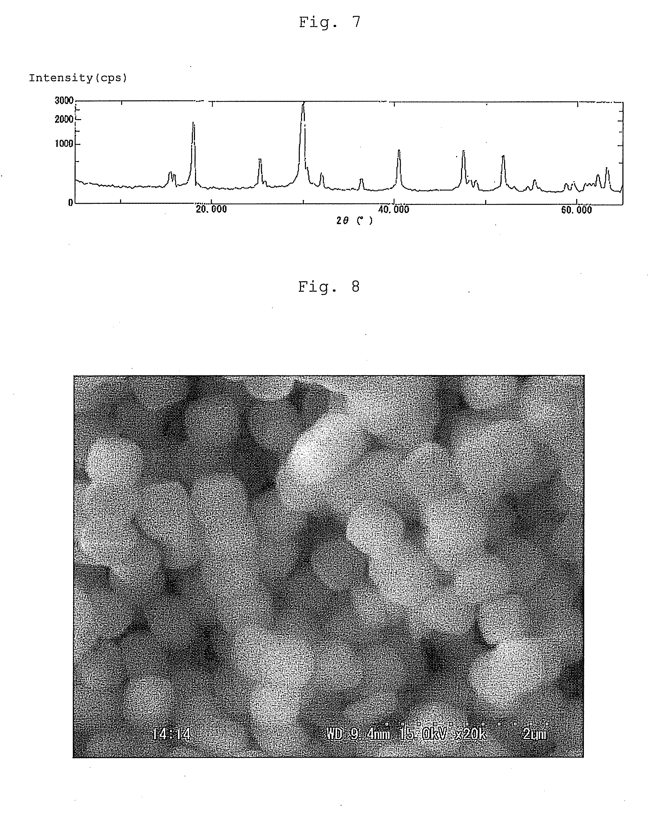

A heat-shielding agent No. 6 was obtained in the same manner as in the production of the heat-shielding agent No. 4 except that the magnesium sulfate was replaced with indium sulfate (In₂(SO₄)₃). The reaction molar ratio [Al]:[Zn]:[Fe]:[In] in the above synthesis was 1:0.62:0.003:0.062. Fig. 7 shows the X-ray diffraction pattern of the heat-shielding agent No. 6, and Fig. 8 shows the SEM photograph thereof.

### (Heat-shielding agent No. 7)

Na_{1.0}[Al_{0.59} (Fe_{0.004}Zn_{0.905}In_{0.091}) _{0.41}]_{3.0}(SO₄) _{2.1} (OH) _{5.8} · 3.0H₂O (8)

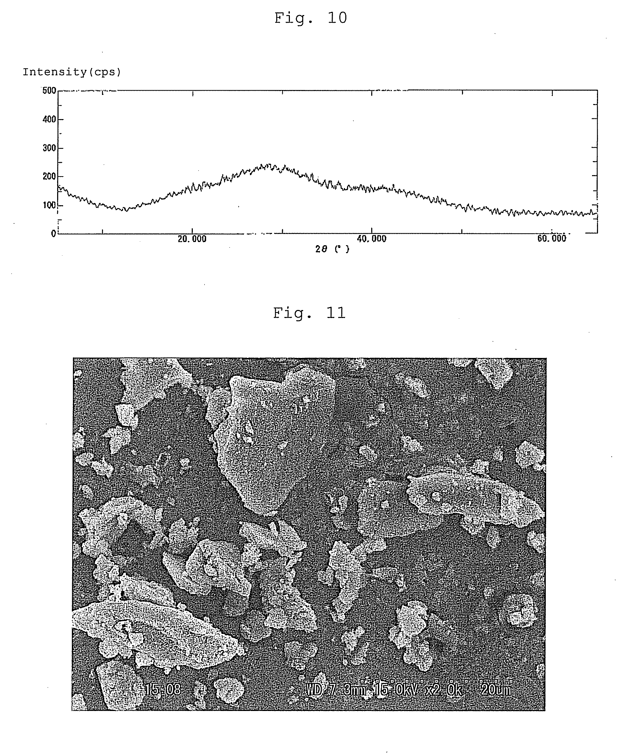

500 mL of a mixture solution containing 0.065 mol of aluminum sulfate, 0.096 g (0.00024 mol) of ferric sulfate, 0.04 mol of zinc oxide (class 1/Seido Chemical Ind. Co., Ltd.), 1.14 g of magnesium sulfate (Mg(SO₄)) and 0.3 mol of sodium sulfate was stirred at 25°C for 1 hour. Then, 230.7 mL of a 3.38N sodium hydroxide aqueous solution was added to the above mixture solution, and the mixture was stirred at 40°C for 12 hours. Then, filtering, washing and drying were carried out to give a heat-shielding agent No. 7 that was a transition metal salt hydroxide precursor having an amorphous form. The reaction molar ratio [Al]:[Zn]:[Fe]:[Mg] in this case was 1:0.62:0.003:0.062. Fig. 10 shows the X-ray diffraction pattern of the heat-shielding agent No. 7, and Fig. 11 shows the SEM photograph thereof.

**Table 1**

| Composition | | Heat-shielding agent No. 1 | Heat-shielding agent No. 2 | Heat-shielding agent No. 3 | Heat-shielding agent No. 4 | Heat-shielding agent No. 5 | Heat-shielding agent No. 6 | Heat-shielding agent No. 7 |
|---|---|---|---|---|---|---|---|---|
| Molar ratio to Al | Al | 1 | 1 | 1 | 1 | 1 | 1 | 1 |
| | Fe | 1.5 | 0.034 | 0.003 | 1.5 | 1.5 | 1.5 | 0.003 |
| | Zn | 0 | 0 | 0 | 1.5 | 1.5 | 1.5 | 0.62 |
| | Mg | 0 | 0 | 0 | 0.1 | 0 | 0 | 0.62 |
| | Mn | 0 | 0 | 0 | 0 | 0.1 | 0 | 0 |
| | In | 0 | 0 | 0 | 0 | 0 | 0.1 | 0 |
| Average secondary particle diameter µm | | 0.65 | 0.7 | 0.62 | 0.9 | 1.2 | 1 | 12 |
| Particle form | | Polyhedral | Discal | Spherical | Cylindrical | Cylindrical | Cylindrical | Amorphous |

### Example 2

### (Preparation of heat-shielding coating agent)

An acrylic resin (trade name: SUMIPEX MGSS, supplied by Sumitomo Chemical Co., Ltd.) was placed in a mixture solvent containing toluene, 2-butanone and butyl acetate, and the mixture was stirred at room temperature for one day including the night, to prepare a polymethacrylic acid solution. When a coating solution is applied under conditions of 25°C and 60 %RH, the amount of toluene, 20 mL of 2-butanone and butyl acetate per 20 g of the acrylic resin may be 50 mL, 20 mL and 20 mL, respectively. In an actual application, however, the above amounts are required to be proper amounts by fine adjustments depending upon ambient temperature, humidity and the like. The heat-shielding agent particles prepared in Example 1 were added to the above polymethacrylic acid solution and homogeneously dispersed therein to prepare heat-shielding coating agents.

### Example 3

### (Formation of heat-shielding film)

A biaxially stretched polyester film having 70 mm X 70 mm in size and 100 µm of thickness (trade name: Diafoil T680E/Mitsubishi Chemical polyester film Corporation) was placed on a surface plate and used as a substrate. And, 1 mL of each of the heat-shielding agent prepared in Example 2 was dropped and applied thereon used with an applicator YBA-4 (of Toyomitsu Seiki K.K.), and the applied heat-shielding agents were dried at room temperature to give heat-shielding film test pieces. In this case, it was set that each heat-shielding layer immediately after its application had a thickness of 25 µm (a dried layer came to have a thickness of about 1/5 of the time of application). Each test piece after dried was measured for a thickness with a test piece thickness gage, and it was confirmed that each application layer had a thickness of approximately 5 µm by calculating them on the basis of the substrate thickness. Tables 2 and 3 show conditions for producing the heat-shielding film test pieces.

**Table 2**

| | | Film No. 1 | Film No. 2 | Film No. 3 | Film No. 4 | Film No. 5 |
|---|---|---|---|---|---|---|
| Substrate | | PET | PET | PET | PET | PET |
| Application thickness µm | | 25 | 25 | 25 | 25 | 25 |
| Heat-shielding coating agent | | No. 1 | No. 1 | No. 1 | No. 2 | No. 3 |
| Amount part by weight | Binder | 100 | 100 | 100 | 100 | 100 |
| | Solvent | proper amount | proper amount | proper amount | proper amount | proper amount |
| | Heat-shielding agent | 100 | 150 | 200 | 200 | 200 |

**Table 3**

| | | Film No. 6 | Film No. 7 | Film No. 8 | Film No. 9 |
|---|---|---|---|---|---|
| Substrate | | PET | PET | PET | PET |
| Application thickness µm | | 25 | 25 | 25 | 25 |
| Heat-shielding coating agent | | No. 4 | No. 5 | No. 5 | No. 6 |
| Amount part by weight | Binder | 100 | 100 | 100 | 100 |
| | Solvent | proper amount | proper amount | proper amount | proper amount |
| | Heat-shielding agent | 200 | 150 | 200 | 200 |

### Example 4

### (Evaluation of transmitted spectrum)

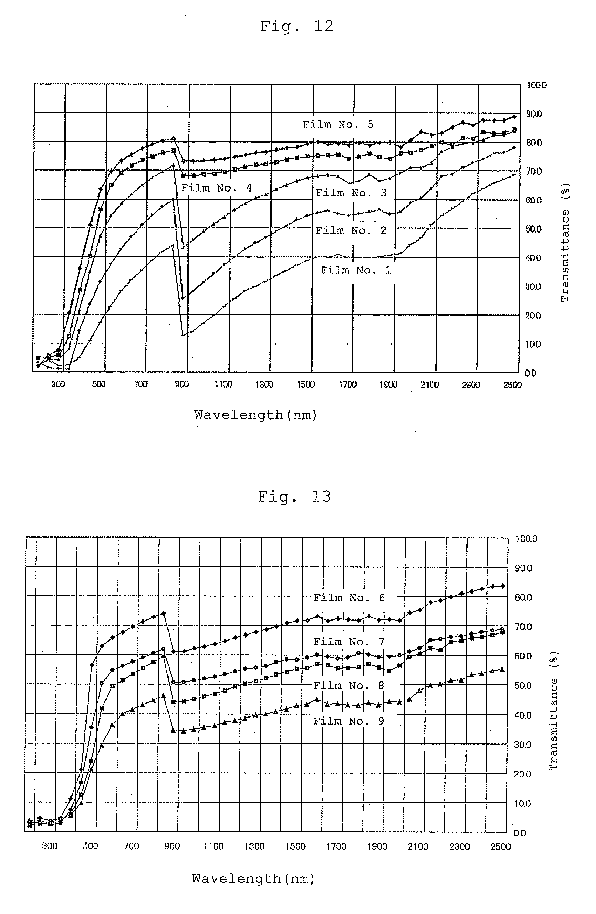

Figs. 12 and 13 show the results of evaluations of transmittances of the heat-shielding films prepared in Example 3 in the wavelength region of 200 to 2,500 nm with a spectrophotometer. It is seen that the heat-shielding coating agents of this invention have the property of blocking ultraviolet and infrared rays.

### Example 5

### (Evaluation of heat-shielding capability)

100 Parts by weight of metallocene polyethylene (trade name: Creolex K4125/Asahi Kasei Chemicals Corporation) was kneaded with 20 parts by weight of the heat-shielding agent No. 1 and 3 parts by weight of stearic acid, followed by processing with a press to form a 0.1 mm thick film.

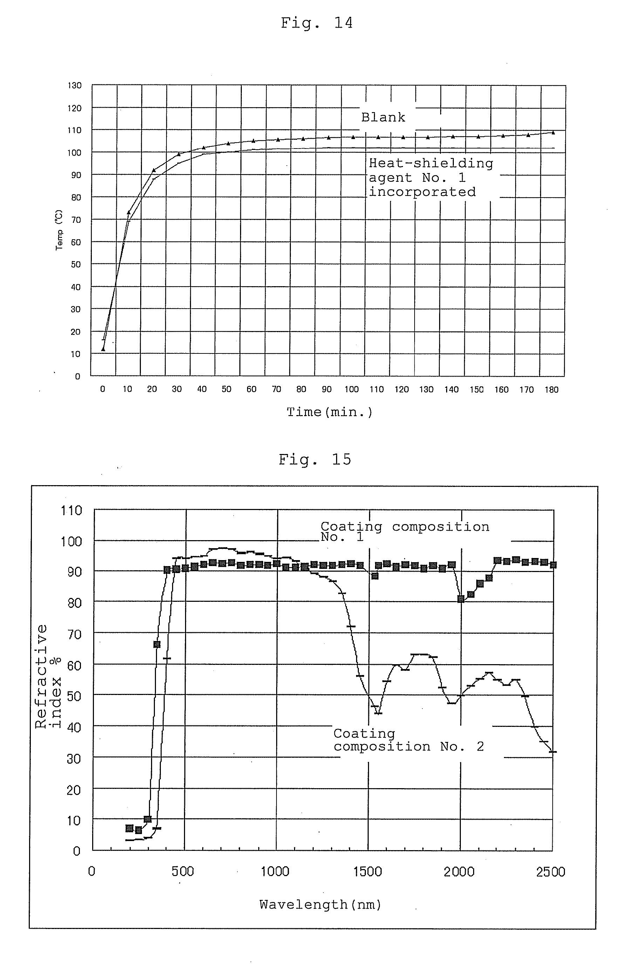

The thus-formed heat-shielding film No. 10 was placed in a position 50 mm lower from a 125W infrared lamp (trade name: IR100V 125WRHG/Toshiba Lighting & Technology Corporation), and a thermometer was set in a position further 20 mm below it, to compare a temperature increase after the lamp was turned on with that of a PET film (blank) having no heat-shielding agent No. 1 incorporated. Fig. 14 shows the relationship between an elapsed time up to 3 hours after the light was on and temperatures that the thermometer showed.

In Fig. 14, it is seen that the PET film containing the heat-shielding agent No. 1 can inhibit a temperature increase by 5°C or more as compared with the blank. The heat-shielding agent of this invention can provide the effect of blocking infrared when kneaded into a resin.

### Example 6

### (Preparation of heat-shielding coating composition)

Heat-shielding coating compositions Nos. 1 and 2 having compositions shown in Table 4 were prepared. As a comparative example of heat-shielding agent, titanium oxide (trade name: MT-150W/Tayca Corporation) was used.

**Table 4**

| Composition | Heat-shielding coating composition No. 1 parts | Heat-shielding coating composition No. 2 parts |
|---|---|---|
| Heat-shielding agent No. 4 | 40 | - |
| Sodium metaphosphate-coated titanium oxide (trade name: MT-150W/Tayca Corporation) | - | 40 |
| Acryl emulsion (trade name:SE-810A/TAISEI FINE CHEMICALS CO., LTD.) | 50 | 50 |
| Plasticizer (DOP/J-PLUS Company, Limited.) | 2 | 2 |
| Dispersing agent (trade name: DISPERBIK-190/BYK Chemie) (BYK Additives and Instruments) | 5 | 5 |
| Defoaming agent (trade name: BYK-024/BYK Chemie) | 3 | 3 |

### Example 7

### (Evaluation of heat-shielding coating composition)

The heat-shielding coating compositions Nos. 1 and 2 were applied to slide glasses (soda glasses) to produce heat-shielding coated plates Nos. 1 and 2.

For rendering the application thickness uniform, the application was carried out not with a brush but with an applicator in the same manner as in Example 3. In this case, it was set that the heat-shielding layers immediately after the application had a thickness of 400 µm. Each test piece after dried was measured for a thickness with a test piece thickness gage, and it was confirmed that each application layer had a thickness of approximately 200 µm by calculating them on the basis of the substrate thickness.

Fig. 15 shows the results of evaluations of transmittances of the thus-produced heat-shielding coated plates Nos. 1 and 2 in the wavelength region of 200 to 2,500 nm with a spectrophotometer. It is seen that the heat-shielding coating composition of this invention has great heat-shielding capability as compared with conventionally used titanium oxide.

The result of Example 4 shows that a transparent film to which the heat-shielding coating agent of this invention is applied has a heat-shielding effect while it maintains transparency, so that the heat-shielding coating agent of this invention can prevent an increase in temperature in a greenhouse in summer seasons by applying it to an agricultural film (outer surface of a plastic greenhouse).

The result of Example 5 shows that a resin containing the heat-shielding agent composition of this invention has heat-shielding capability, so that it can prevent an increase in room temperature by processing it into a film and attaching the film to a window glass, and the like. Otherwise, it can be spun and a spun fiber or yarn can be used as a material for heat-insulating clothes.

The result of Example 7 shows that the heat-shielding coating composition of this invention has a sufficient heat-shielding effect even when it is used for a thin coating layer having a thickness of 200 µm or less. Therefore, the above heat-shielding coating composition can produce an electric power saving effect when applied to a reflector plate of a heating appliance or a lighting fixture. Further, the above heat-shielding coating composition can prevent an increase in an internal temperature when applied to the outer wall of a building or a body of an automobile or electric railcar. Further, the heat-shielding agent composition of this invention is capable of absorbing ultraviolet rays and hence inhibits deterioration caused by ultraviolet rays in every use field.

### Effect of the Invention

The heat-shielding agent composition of this invention has transparency and exhibits the capability of blocking ultraviolet and infrared rays. The heat-shielding material of this invention exhibits weatherability and a great heat-shielding effect.

## Claims

1. A heat-shielding agent composition comprising a transition metal salt hydroxide of the following formula (1) or a precursor thereof,
M¹ₐ[Al₁₋ₓ(M²₁₋ₓ(M²_{1-y}Fe-(III)_{y})ₓ]_{b}A_{y}B_{z}(OH)ₙ·mH₂O (1)
wherein M¹ represents at least one monovalent or divalent cation selected from the group consisting of Ca²⁺, Na⁺, NH⁴⁺, K⁺ and H₃O⁺, M² represents at least one transition metal ion selected from Zn²⁺, Cu²⁺, Mg²⁺, Mn²⁺, In³⁺, Sn²⁺ and Ti⁴⁺, A represents an organic acid anion having 2 to 10 carbon atoms and containing 1 to 4 carboxyl groups in a molecule, B represents at least one inorganic acid anion selected from the group consisting of sulfate ion (SO₄²⁻), nitrate ion (NO₃⁻) and silicate ion (SiO₃²⁻), and a, b, m, n, x, y and z are 0.7≤a≤1.35, 2.7≤b≤3.3, 0≤m≤5, 4≤n≤7, 0≤x≤0.66, 0≤y≤1.0 and 1.7≤z≤2.4.

2. The heat-shielding agent composition of claim 1, which further contains a synthetic resin or a water-base emulsion resin.

3. The heat-shielding agent composition of claim 1, which contains 0.1 to 50 % by weight of the transition metal salt hydroxide of the formula (1) or a precursor thereof.

4. A heat-shielding material comprising a substrate and a coating layer being formed thereon and containing the heat-shielding agent composition of claim 1.

5. The heat-shielding material of claim 4, which is an infrared cut filter.

6. The heat-shielding material of claim 4, which is an infrared reflector.

7. A lighting fixture having the heat-shielding material of claim 4.

8. A heating appliance having the heat-shielding material of claim 4.

9. A heat-shielding method comprising the step of applying the heat-shielding agent composition of claim 2 to an outer wall of a building.

10. A method for preventing a room temperature from increasing by attaching the infrared cut filter of claim 5 to a window glass.

11. Heat-insulating clothes comprising the heat-shielding agent composition of claim 1.
